# EUROPÄISCHE PATENTANMELDUNG

(11) **EP 2 314 484 A2**
(43) Veröffentlichungstag der Anmeldung: **27.04.2011**
(21) Anmeldenummer: 10008504.2
(22) Anmeldetag: 14.08.2010
(51) Int. Cl.: B60R 25/00

(54) **Fahrzeugtür mit einer schlüssellosen Zugangskontrolleinrichtung**

(30) Priorität: 22.10.2009 DE 102009050230
(71) Anmelder: Audi AG, 85045 Ingolstadt (DE)
(72) Erfinder: Täupker, Björn, 85072 Eichstätt (DE)

(57) **Zusammenfassung**

Fahrzeugtür mit einer schlüssellosen Zugangskontrolleinrichtung, aufweisend ein innerhalb der Fahrzeugtür angeordnetes Türschloss 1 mit einem ersten Gehäuse 1a, das die Fahrzeugtür zur Öffnung freigeben oder sperren kann, sowie eine Sende-/Empfangseinheit 2, die Signale mit einem tragbaren Transponder austauschen kann, wobei das Türschloss 1 von der Sende-/Empfangseinheit 2 direkt oder indirekt beeinflussbar ist, wobei die Sende-/Empfangseinheit 2 ein zweites Gehäuse 2a aufweist und wobei die Sende-/Empfangseinheit 2 auf dem ersten Gehäuse 1a des Türschlosses 1 angeordnet werden kann.

## Beschreibung

Fahrzeugtür mit einer schlüssellosen Zugangskontrolleinrichtung ("keyless entry" bzw. "keyless go") gemäß dem Oberbegriff des Patentanspruchs 1.

Derartige Fahrzeugtüren werden in Fahrzeugen dazu eingesetzt, um die Autorisierung eines außerhalb des Fahrzeugs befindlichen Nutzers berührungslos über eine Funkverbindung, beispielsweise zu einem Schlüssel oder einer Chipkarte, zu überprüfen und bei erfolgreicher Autorisierung das Türschloss der Fahrzeugtür zu öffnen.

Eine Fahrzeugtür mit einer schlüssellosen Zugangskontrolleinrichtung weist im Allgemeinen einen Türkörper auf, der vorzugsweise in einen Trockenraum und einen Nassraum unterteilt ist. Auf der Außenseite der Fahrzeugtür befindet sich ein Türgriff zur Betätigung eines innerhalb der Fahrzeugtür angeordneten Türschlosses. Die Fahrzeugtür weist darüber hinaus eine oder mehrere Antennen auf, die mit einem Steuergerät verbunden sind und drahtlos mit einem mobilen Transponder kommunizieren können. Wie aus der DE 10 2006 044 453 A1 und insbesondere der EP 108 32 80 A2 ersichtlich ist, kann eine Antenne beispielsweise innerhalb des Türgriffs angeordnet sein. In dem Türgriff kann zusätzlich ein Sensor verbaut sein, der die Kommunikation zwischen Antenne und Transponder initiiert.

Die JP 1117 0921 A offenbart eine Struktur zum Verbau einer Antenne für eine schlüssellose Zugangskontrolleinrichtung, wobei die Antenne innerhalb einer Fahrzeugtür parallel zur Türaußenhaut angeordnet und teilweise in diese eingelassen ist. Die Antenne weist eine elektrische Kabelverbindung mit einem Steuergerät auf.

Nachteilig ist jedoch, dass eine Anordnung der Antenne innerhalb des Türgriffs sehr aufwändig ist. So bietet der Türgriff nur sehr beengte Platzverhältnisse, an welche die Antenne mit ihren Abmessungen eigens angepasst werden muss. Weiterhin müssen elektrische Leitungen aus dem Türgriff zum Leitungsstrang der Tür geführt werden, was Schwierigkeiten beim Zusammenbau der Anordnung, wie auch bei der Abdichtung mit sich bringt. Da in der Regel nicht in allen Fahrzeugen einer Baureihe schlüssellose Zugangskontrollsystem verbaut werden, müssen entweder Türgriffe vorgesehen werden, die keine Antennen aufnehmen können oder die Türgriffe so gestaltet werden, dass ein Fehlen der Antenne keine Beeinträchtigungen, insbesondere bei der Dichtigkeit, mit sich bringen.

Auch eine Anordnung der Antenne an einem Türblech bietet Nachteile, so müssen bei der Fahrzeugtür Befestigungsmittel, wie beispielsweise Bohrlöcher, vorgesehen werden, was einen weiteren Produktionsschritt ergibt, aber aufgrund des oftmals nur optionalen Verbaus einer schlüssellosen Zugangskontrolleinrichtung nur bei einem Teil der Fahrzeugtüren notwendig ist.

Aufgabe der vorliegenden Erfindung ist es daher eine Fahrzeugtür mit einer schlüssellosen Zugangskontrolleinrichtung bereitzustellen, bei der flexibel auf einen optionalen Verbau der schlüssellosen Zugangskontrolleinrichtung reagiert werden kann, bei der eine größere Freiheit bei der Gestaltung der Antenne besteht und bei der die Antenne einfach in die Fahrzeugtür einbaubar ist.

Diese Aufgabe wird durch die Merkmale des Patentanspruchs 1 gelöst.

Fahrzeugtür mit einer schlüssellosen Zugangskontrolleinrichtung, aufweisend ein innerhalb der Fahrzeugtür angeordnetes Türschloss mit einem ersten Gehäuse, das die Fahrzeugtür zur Öffnung freigeben oder sperren kann, sowie eine Sende-/Empfangseinheit, die Signale mit einem tragbaren Transponder austauschen kann, wobei das Türschloss von der Sende-/Empfangseinheit direkt oder indirekt beeinflussbar ist, wobei die Sende-/Empfangseinheit ein zweites Gehäuse aufweist und wobei die Sende-/Empfangseinheit auf dem ersten Gehäuse des Türschlosses angeordnet werden kann.

Indem die Sende-/Empfangseinheit in einem eigenen Gehäuse angeordnet ist und auf dem Gehäuse des Türschlosses angeordnet werden kann, ist es möglich die für die schlüssellose Zugangskontrolleinrichtung benötigte Sende-/Empfangseinheit sehr flexibel an dem Türschloss zu befestigen. Da in der Regel nicht bei allen Fahrzeugen einer Baureihe schlüssellose Zugangskontrolleinrichtungen verbaut werden, braucht die Sende-/Empfangseinheit auf einem einheitlichen Türschloss nur dann verbaut werden, wenn dies gewünscht ist. Dadurch verringert sich die Variantenvielfalt, da in allen Fahrzeugtüren gleiche Türschlösser, Türgriffe, etc. genutzt werden können und nur bei Bedarf die optionale Sende-/Empfangseinheit außen an dem Türschloss angeordnet wird. Da im Bereich um das Türschloss meist sehr viel ungenutzter Raum vorhanden ist, kann die geometrische Ausgestaltung der Sende-/Empfangseinheit deutlich freier erfolgen, als wenn diese in das Türschloss oder in einen Türgriff integriert wird. Zudem erleichtert sich der Zusammenbau, da der vorhandene Raum viel Bewegungsfreiheit bietet und lediglich die beiden Gehäuse aneinander befestigt werden müssen. Der Transponder wird vorzugsweise vom Nutzer des Fahrzeugs mitgeführt, wodurch die Sende-/Empfangseinheit nach einem erfolgreichen Signalaustausch mit dem Transponder eine Authentisierung des Nutzers durchführen kann. Basierend auf dem Ergebnis der Authentisierung wird die Sende-/Empfangseinheit direkt (wenn in dem Gehäuse der Sende-/Empfangseinheit zusätzlich ein Steuergerät angeordnet ist) oder indirekt (beispielsweise über ein zwischengeschaltetes Steuergerät) das Türschloss derart beeinflussen, dass dieses die Fahrzeugtür zum Öffnen freigibt. Als Transponder dienen dabei in der Regel Schlüssel oder Chipkarten.

In einer bevorzugten Ausführung wird die Sende-/Empfangseinheit mit dem Türschloss verrastet und/oder verschraubt und/oder verklebt. Durch ein Verrasten der Sende-/Empfangseinheit mit dem Gehäuse des Türschlosses, kann dies sehr schnell und einfach befestigt werden. Ein Verschrauben oder Verkleben der Sende-/Empfangseinheit mit dem Gehäuse des Türschlosses fixiert beide dauerhaft sicher zueinander. Ein Kombination der genannten Befestigungsmethoden kann ebenso erfolgen und führt zu einer besonders sicheren Befestigung.

In einer bevorzugten Ausführung umfasst die Sende-/Empfangseinheit eine in dem zweiten Gehäuse angeordnete Antenne, einen von außerhalb betätigbaren Schalter und einen zweiten elektrischen Anschluss. Indem alle für die Funktion des schlüssellosen Zugangskontrollsystem benötigten Komponenten, die über die bereits standardmäßig in der Fahrzeugtür vorhandenen Komponenten, wie beispielsweise das Türschloss und der Türgriff, hinausgehen, in dem Gehäuse der Sende-/Empfangseinheit vor Feuchtigkeit geschützt untergebracht sind, muss die Sende-/Empfangseinheit zum Umbau einer herkömmlichen Fahrzeugtür zu einer Fahrzeugtür mit schlüsselloser Zugangskontrolleinrichtung nur an dem Türschloss befestigt werden.

In einer bevorzugten Ausführung ist an der Fahrzeugtür ein von außen manuell zu betätigender Türgriff angeordnet. Ein solcher Türgriff ist in der Regel schwenkbar gelagert und steht mit dem Türschloss in Wirkverbindung, so dass eine Betätigung des Türgriffs, nach erfolgtem Entsperren des Türschlosses aufgrund einer Authentisierung des Transponders durch die Sende-/Empfangseinheit und/oder ein Steuergerät, eine Öffnung der Fahrzeugtür zur Folge hat. An dem Türgriff ist zudem ein Betätigungstaster angeordnet, der über eine mechanische Betätigungseinrichtung mit dem Schalter der Sende-/Empfangseinheit in Wirkverbindung steht, um diesen zu betätigen. Mit einem derartigen Betätigungstaster ist es möglich einen bestimmten Betriebsmodus der Sende-/Empfangseinheit auf Grund einer Benutzereingabe hervorzurufen. So kann beispielsweise das Türschloss durch einen Druck des Nutzers auf den Betätigungstaster versperrt werden, indem die lineare Verschiebung des Betätigungstasters über eine mechanische Betätigungseinrichtung, beispielsweise einer linear geführten Betätigungsstange, zu einer Änderung des Schaltzustands des Schalters führt.

In einer bevorzugten Ausführung teilt eine Wandung die Fahrzeugtür in eine Nassraumseite und eine Trockenraumseite, wobei das Türschloss auf der Nassraumseite angeordnet ist. Wird die Fahrzeugtür von einer Wandung, beispielsweise einem Türinnenblech, in eine Nassraumseite und eine Trockenraumseite getrennt, so müssen die auf der Trockenraumseite angeordneten Komponenten weniger stark gegen Feuchtigkeit abgedichtet werden, wie diejenigen auf der Nassraumseite. Die Nassraumseite befindet sich dabei zwischen einem Türaußenblech und der Wandung, während sich die Trockenraumseite zwischen der Wandung und einer Türinnenverkleidung befindet. Das Türschloss befindet sich auf der Nassraumseite, wodurch dessen Gehäuse entsprechend gegen Feuchtigkeit abgedichtet sein muss, jedoch leichter von außen kontaktierbar ist. Gleiches gilt für die auf dem Gehäuse des Türschlosses befestigte Sende-/Empfangseinheit.

In einer bevorzugten Ausführung weist die Wandung einen perforierten Bereich auf, der von dem zweiten elektrischen Anschluss der Sende-/Empfangseinheit durchdrungen werden kann, so dass der zweite elektrische Anschluss von der Trockenraumseite aus kontaktierbar ist. Wird durch eine Perforation der Wandung eine Sollbruchstelle in eben dieser erzeugt, so kann bei Bedarf eine Öffnung in der Wandung geschaffen werden, durch die der zweite elektrische Anschluss der Sende-/Empfangseinheit hindurchragen kann, so dass dieser von der Trockenraumseite aus kontaktierbar ist. Dabei ist es vorteilhaft, wenn der zweite elektrische Anschluss an der Wandung befestigt wird, beispielsweise durch Verrasten, um deren Lage zueinander dauerhaft festzulegen.

In einer bevorzugten Ausführung weist das erste Gehäuse des Türschlosses einen perforierten Bereich auf, der von dem zweiten elektrischen Anschluss der Sende-/Empfangseinheit durchdrungen werden kann, so dass der zweite elektrische Anschluss von der Trockenraumseite aus kontaktierbar ist. Besonders vorteilhaft wird dazu das Gehäuse des Türschlosses um eine flanschartige Anschlussplatte erweitert, die eine entsprechende Öffnung in der Wandung dichtend abdeckt. Auf der Anschlussplatte ist neben dem ersten elektrischen Anschluss des Türschlosses ein perforierter Bereich ausgespart, der im Bedarfsfall zu einer Öffnung für den zweiten elektrischen Anschluss der Sende-/Empfangseinheit durchbrochen werden kann, so dass dieser von der Trockenraumseite aus kontaktierbar ist. Dies reduziert die Variantenvielfalt, da nur ein einziges Gehäuse des Türschlosses benötigt wird, welches je nach Bedarf einen oder zwei elektrische Anschlüsse trägt.

In einer bevorzugten Ausführung weist das Türschloss einen ersten elektrischen Anschluss auf, der die Wandung durchdringt und von der Trockenraumseite aus kontaktierbar ist. Indem das Türschloss einen eigenen elektrischen Anschluss aufweist, kann das Türschloss unabhängig von der Sende-/Empfangseinheit angesteuert werden. Dabei durchdringt der erste elektrische Anschluss die Wandung und verrastet vorzugsweise mit dieser.

In einer bevorzugten Ausführung ist an dem Türschloss ein dritter elektrischer Anschluss angeordnet, der mit dem zweiten elektrischen Anschluss der Sende-/Empfangseinheit verbunden werden kann. Wird an dem Türschloss ein dritter elektrischer Anschluss angeordnet, der intern mit dem ersten elektrischen Anschluss des Türschlosses elektrisch verbunden ist, so kann der zweite elektrische Anschluss der Sende-/Empfangseinheit über eine elektrische Verbindung mit dem dritten elektrischen Anschluss des Türschlosses auf der Nassraumseite verbunden werden. Damit kann die Sende-/Empfangseinheit über diese Verbindung und über den ersten elektrischen Anschluss Signale von der Nassraumseite auf die Trockenraumseite übertragen und umgekehrt.

In einer bevorzugten Ausführung sind der erste, zweite und/oder dritte elektrische Anschluss gegen Feuchtigkeit abgedichtet.

In einer bevorzugten Ausführung sind der erste und/oder der zweite elektrische Anschluss von einem Leitungssatz für das Bordnetz kontaktierbar und stehen über diesen mit einem Steuergerät in Wirkverbindung. Wird der erste und/oder der zweite elektrische Anschluss mit dem Leitungssatz für das Bordnetz verbunden, so können die elektrischen Signale der einzelnen Fahrzeugtüren einem zentralen Steuergerät zur Verarbeitung zugeführt werden.

In einer bevorzugten Ausführung ist das Türschloss als elektrisches Türschloss ausgebildet. Dadurch ist es möglich auf die Vorsensierung des Transponders durch einen Näherungssensor zu verzichten. Wird der Türgriff betätigt, erfolgt eine sofortige Authentisierung des Transponders durch die Sende-/Empfangseinheit und/oder ein Steuergerät, wobei das Türschloss in Abhängigkeit der Authentisierung geschaltet wird. Dies ist in einer ausreichend kurzen Zeitspanne möglich, so dass der Nutzer die Fahrzeugtür bereits mit der ersten Betätigung des Türgriffs öffnen kann. Weiterhin ist es denkbar in jedes elektrisches Türschloss ein Steuergerät für die schlüssellose Zugangskontrolle zu verbauen, welches mit der auf dem Türschloss angeordneten Sende-/Empfangseinheit Daten austauscht. Sollen einheitliche Türschlösser verwendet werden, ist es vorteilhaft das Steuergerät zusammen mit der Sende-/Empfangseinheit in dessen Gehäuse anzuordnen, wobei sich die Variantenvielfalt reduziert.

Weiter Einzelheiten, Merkmale und Vorteile der Erfindung ergeben sich aus der nachstehenden Beschreibung eines bevorzugten Ausführungsbeispiels unter Bezugnahme auf die Zeichnungen.

Darin zeigen:
**Fig. 1** eine Schnittansicht eines ersten Ausführungsbeispiels einer erfindungsgemäßen Fahrzeugtür;
**Fig. 2** eine Schnittansicht eines zweiten Ausführungsbeispiels einer erfindungsgemäßen Fahrzeugtür;
**Fig. 3** eine Schnittansicht eines dritten Ausführungsbeispiels einer erfindungsgemäßen Fahrzeugtür.

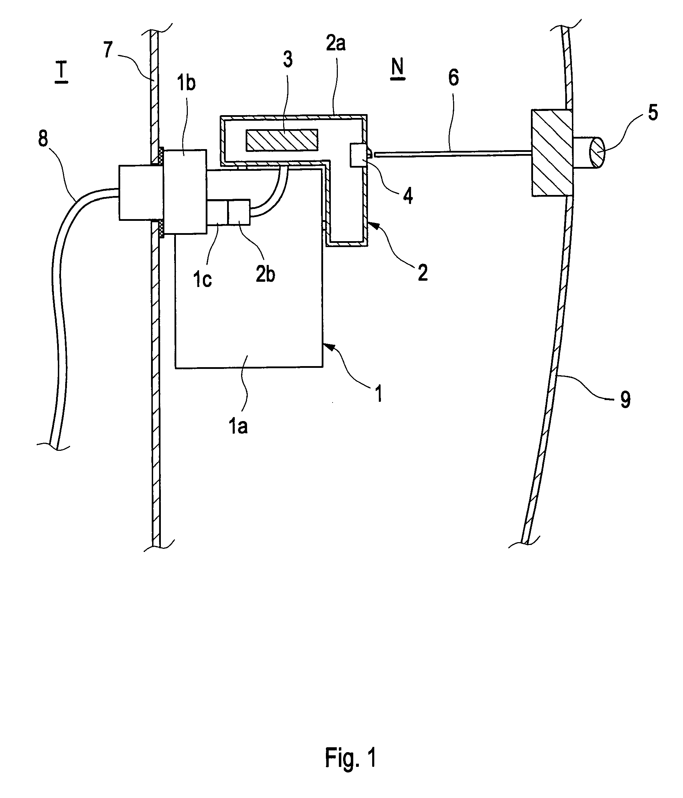

Gemäß **Fig. 1** hat eine Fahrzeugtür mit einer schlüssellosen Zugangskontrolleinrichtung eine Nassraumseite N und eine Trockenraumseite T, die von einer Wandung 7 getrennt werden. Auf der Nassraumseite N befindet sich ein Türschloss 1 mit einem Gehäuse 1a, welches an der Wandung 7 befestigt ist. Auf dem Türschloss 1 ist eine Sende-/Empfangseinheit 2 mit einem Gehäuse 2a angeordnet, welche eine Antenne 3 und einen Mikroschalter 4 umfasst. An einem Türaußenblech 9 ist ein manuell betätigbarer Türgriff 5 angeordnet, der einen in der Figur 1 nicht dargestellten Betätigungstaster trägt. Die Bewegung des Betätigungstasters wird über eine als Betätigungsstange ausgebildete, mechanische Betätigungseinrichtung 6 an den Mikroschalter 4 übertragen, der daraufhin seine Schaltzustände ändert. Das Türschloss 1 verfügt über einen ersten elektrischen Anschluss 1b, der von der Trockenraumseite T durch einen Leitungssatz für das Bordnetz 8 kontaktiert werden kann, wozu er gegebenenfalls die Wandung 7 durchdringt. Der Durchgang des ersten elektrische Anschlusses 1b in der Wandung 7 ist gegenüber Feuchtigkeit abgedichtet. Das Türschloss 1 weist weiterhin einen dritten elektrischen Anschluss 1c auf, der mit einem zweiten elektrischen Anschluss 2b der Sende-/Empfangseinheit verbunden werden kann, wobei der erste 1b und der dritte 1c elektrische Anschluss intern elektrisch miteinander verbunden sind.

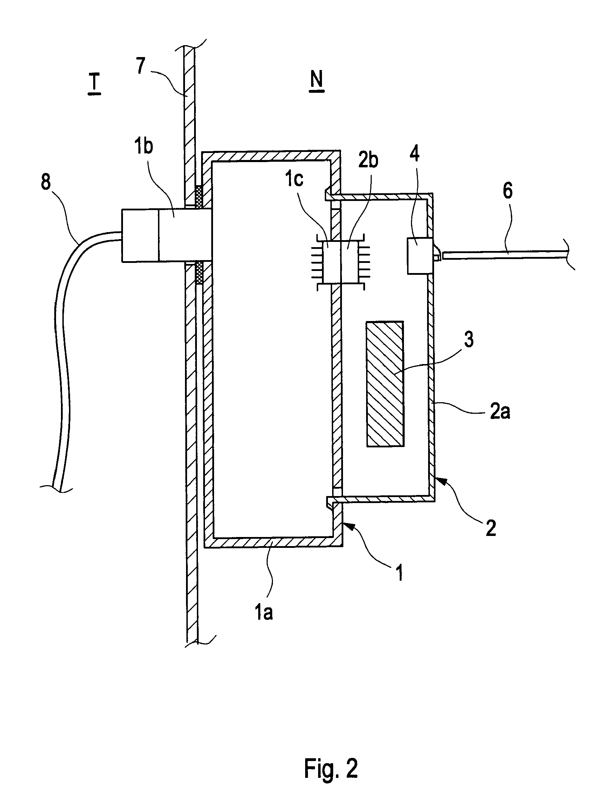

Gemäß **Fig. 2** hat eine Fahrzeugtür mit einer schlüssellosen Zugangskontrolleinrichtung eine Nassraumseite N und eine Trockenraumseite T, die von einer Wandung 7 getrennt werden. Auf der Nassraumseite N befindet sich ein Türschloss 1 mit einem Gehäuse 1a, welches an der Wandung 7 befestigt ist. Auf dem Türschloss 1 ist eine Sende-/Empfangseinheit 2 mit einem Gehäuse 2a rastend angeordnet, welche eine Antenne 3 und einen Mikroschalter 4 umfasst. Der Mikroschalter 4 kann über eine mechanische Betätigungseinrichtung 6 von einem nicht dargestellten Betätigungstaster auf der Türaußenseite betätigt werden. Das Türschloss 1 verfügt über einen ersten elektrischen Anschluss 1b, der von der Trockenraumseite T durch einen Leitungssatz für das Bordnetz 8 kontaktiert werden kann, wozu er gegebenenfalls die Wandung 7 durchdringt. Der Durchgang des ersten elektrische Anschlusses 1b in der Wandung 7 ist gegenüber Feuchtigkeit abgedichtet. Das Türschloss 1 weist weiterhin einen dritten elektrischen Anschluss 1c auf, der als Stecksockel ausgebildet ist, wobei der erste 1b und der dritte 1c elektrische Anschluss intern elektrisch miteinander verbunden sind. Die Sende-/Empfangseinheit 2 besitzt einen zweiten elektrischen Anschluss 2b, der als komplementärer Stecksockel ausgebildet ist und mit dem dritten elektrischen Anschluss 1c verbunden werden kann.

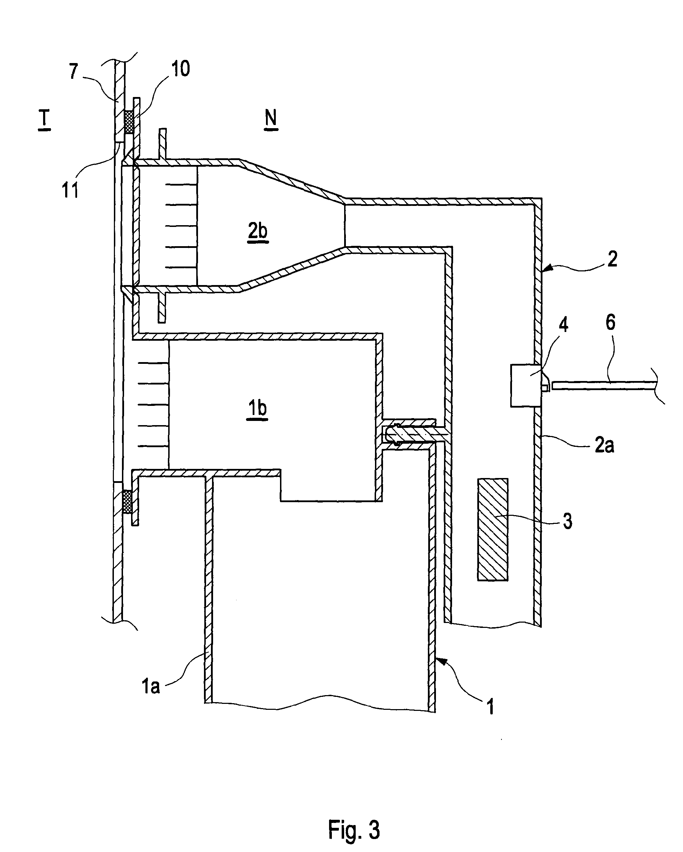

Gemäß **Fig. 3** hat eine Fahrzeugtür mit einer schlüssellosen Zugangskontrolleinrichtung eine Nassraumseite N und eine Trockenraumseite T, die von einer Wandung 7 getrennt werden. Auf der Nassraumseite N befindet sich ein Türschloss 1 mit einem Gehäuse 1a, welches an der Wandung 7 befestigt ist. Auf dem Türschloss 1 ist eine Sende-/Empfangseinheit 2 mit einem Gehäuse 2a rastend angeordnet, welche eine Antenne 3 und einen Mikroschalter 4 umfasst. Der Mikroschalter 4 kann über eine mechanische Betätigungseinrichtung 6 von einem nicht dargestellten Betätigungstaster auf der Türaußenseite betätigt werden. Das Gehäuse 1a des Türschlosses 1 hat eine flanschartige Anschlussplatte 10, die eine Öffnung 11 in der Wandung 7 dichtend überdeckt. Die Anschlussplatte 10 trägt zumindest den ersten elektrischen Anschluss 1b des Türschlosses 1, verfügt jedoch auch über einen vorperforierten Bereich, der bei Bedarf durchbrochen werden kann, um von einem zweiten elektrischen Anschluss 2b der Sende-/Empfangseinheit 2 durchdrungen zu werden. Der zweite elektrische Anschluss 2b ist dabei flüssigkeitsdicht ausgeführt. Der erste 1b und der zweite 2b elektrische Anschluss können auf der Trockenraumseite T von einem nicht dargestellten Leitungssatz für das Bordnetz kontaktiert werden.

### Liste der Bezugszeichen:

- N: Nassraumseite
- T: Trockenraumseite

- 1: Türschloss
- 1a: Gehäuse des Türschlosses
- 1b: erster elektrischer Anschluss
- 1c: dritter elektrischer Anschluss
- 2: Sende-/Empfangseinheit
- 2a: Gehäuse der Sende-/Empfangseinheit
- 2b: zweiter elektrischer Anschluss
- 3: Antenne
- 4: Schalter
- 5: Türgriff
- 6: Betätigungseinrichtung
- 7: Wandung
- 8: Leitungssatz für das Bordnetz
- 9: Türaußenblech
- 10: Anschlussplatte
- 11: Öffnung

## Patentansprüche

1. Fahrzeugtür mit einer schlüssellosen Zugangskontrolleinrichtung, aufweisend ein innerhalb der Fahrzeugtür angeordnetes Türschloss (1) mit einem ersten Gehäuse (1a), das die Fahrzeugtür zur Öffnung freigeben oder sperren kann, sowie eine Sende-/Empfangseinheit (2), die Signale mit einem tragbaren Transponder austauschen kann, wobei das Türschloss (1) von der Sende-/Empfangseinheit (2) direkt oder indirekt beeinflussbar ist, **dadurch gekennzeichnet, dass** die Sende-/Empfangseinheit (2) ein zweites Gehäuse (2a) aufweist, wobei die Sende-/Empfangseinheit (2) auf dem ersten Gehäuse (1 a) des Türschlosses (1) angeordnet werden kann.

2. Fahrzeugtür nach Anspruch 1, **dadurch gekennzeichnet, dass** die Sende-/Empfangseinheit (2) mit dem Türschloss (1) verrastet und/oder verschraubt und/oder verklebt ist.

3. Fahrzeugtür nach einem der Ansprüche 1 bis 2, **dadurch gekennzeichnet, dass** die Sende-/Empfangseinheit (2) eine Antenne (3), einen von außerhalb betätigbaren Schalter (4) und einen zweiten elektrischen Anschluss (2b) umfasst.

4. Fahrzeugtür nach einem der Ansprüche 1 bis 3, **dadurch gekennzeichnet, dass** an der Fahrzeugtür ein von außen manuell zu betätigender Türgriff (5) angeordnet ist, wobei an dem Türgriff (5) ein Betätigungstaster angeordnet ist, der über eine mechanische Betätigungseinrichtung (6) mit dem Schalter (4) der Sende-/Empfangseinheit (2) in Wirkverbindung steht, um diesen zu betätigen.

5. Fahrzeugtür nach einem der Ansprüche 1 bis 4, **dadurch gekennzeichnet, dass** eine Wandung (7) die Fahrzeugtür in eine Nassraumseite (N) und eine Trockenraumseite (T) teilt, wobei das Türschloss (1) auf der Nassraumseite (N) angeordnet ist.

6. Fahrzeugtür nach einem der Ansprüche 1 bis 5, **dadurch gekennzeichnet, dass** die Wandung (7) einen perforierten Bereich aufweist, der von dem zweiten elektrischen Anschluss (2b) der Sende-/Empfangseinheit (2) durchdrungen werden kann, so dass der zweite elektrische Anschluss (2b) von der Trockenraumseite (T) aus kontaktierbar ist.

7. Fahrzeugtür nach einem der Ansprüche 1 bis 5, **dadurch gekennzeichnet, dass** das erste Gehäuse (1a) des Türschlosses (1) einen perforierten Bereich aufweist, der von dem zweiten elektrischen Anschluss (2b) der Sende-/Empfangseinheit (2) durchdrungen werden kann, so dass der zweite elektrische Anschluss (2b) von der Trockenraumseite (T) aus kontaktierbar ist.

8. Fahrzeugtür nach einem der Ansprüche 1 bis 7, **dadurch gekennzeichnet, dass** das Türschloss (1) einen ersten elektrischen Anschluss (1 b) aufweist, der die Wandung (7) durchdringt und von der Trockenraumseite (T) aus kontaktierbar ist.

9. Fahrzeugtür nach einem der Ansprüche 1 bis 8, **dadurch gekennzeichnet, dass** an dem Türschloss (1) ein dritter elektrischer Anschluss (1c) angeordnet ist, der mit dem zweiten elektrischen Anschluss (2b) der Sende-/Empfangseinheit (2) verbunden werden kann.

10. Fahrzeugtür nach einem der Ansprüche 1 bis 9, **dadurch gekennzeichnet, dass** der erste (1 b), zweite (2b) und/oder dritte (1 c) elektrische Anschluss gegen Feuchtigkeit abgedichtet sind.

11. Fahrzeugtür nach einem der Ansprüche 1 bis 10, **dadurch gekennzeichnet, dass** der erste (1 b) und/oder der zweite (2b) elektrische Anschluss von einem Leitungssatz für das Bordnetz (8) kontaktierbar sind und über diesen mit einem Steuergerät in Wirkverbindung stehen.

12. Fahrzeugtür nach einem der Ansprüche 1 bis 11, **dadurch gekennzeichnet, dass** das Türschloss (1) als elektrisches Türschloss ausgebildet ist.
